Europäisches Patentamt

European Patent Office

Office européen des brevets

(19)

(11) Numéro de publication: **0 352 603**
**A1**

(12) **DEMANDE DE BREVET EUROPEEN**

(21) Numéro de dépôt: 89113151.8

(22) Date de dépôt: 18.07.89

(51) Int. Cl.4: **H01M 2/16 , H01M 2/14 , H01M 12/06**

(30) Priorité: 25.07.88 FR 8810018

(43) Date de publication de la demande:
31.01.90 Bulletin 90/05

(84) Etats contractants désignés:
ES FR

(71) Demandeur: **CIPEL**
**125, rue du Président Wilson**
**F-92300 Levallois-Perret(FR)**

Demandeur: **WONDER**
**7-9, rue Paul Vaillant-Couturier**
**F-92300 Levallois-Perret(FR)**

(72) Inventeur: **Mas, Jean-Claude**
**c/o CIPEL 125, rue du Président Wilson**
**F-92300 Levallois-Perret(FR)**
Inventeur: **Mendiboure, André**
**c/o CIPEL 125, rue du Président Wilson**
**F-92300 Levallois-Perret(FR)**

(74) Mandataire: **Weinmiller, Jürgen et al**
**Lennéstrasse 9 Postfach 24**
**D-8133 Feldafing(DE)**

(54) Séparateur pour générateur électrochimique à électrolyte alcalin de type métal-air.

(57) Séparateur pour générateur électrochimique à électrolyte alcalin, de type métal-air, comprenant un support à base de fibres tissées ou non tissées, caractérisé par le fait qu'au moins une face dudit support est munie d'au moins un film en alcool polyvinylique insoluble en milieu alcalin.

EP 0 352 603 A1

## Séparateur pour générateur électrochimique à électrolyte alcalin de type métal-air

La présente invention concerne un séparateur pour générateur électrochimique à électrolyte alcalin, de type métal-air, comportant entre autre une électrode poreuse positive à base d'un oxyde de métal régénérable par l'oxygène diffusant dans la porosité de cette électrode.

De manière générale, les séparateurs utilisés dans les piles et accumulateurs doivent avoir les propriétés suivantes :
- Une résistivité électrique élevée afin d'éviter les courants de court-circuit entre les électrodes.
- Une porosité suffisante pour permettre le passage des ions entre les compartiments cathodiques et anodiques.
- Une résistance mécanique élevée, pour résister aux contraintes de manipulation lors de la fabrication, et aux contraintes dues au changements de volume des électrodes lors des processus de charge et décharge.
- Une résistance chimique à la dégradation par l'électrolyte alcalin fortement concentré, les impuretés, et les matériaux d'électrode.
- Un faible coût et une fabrication aisée.

Les séparateurs classiquement utilisés dans les piles alcalines et salines sont constitués de fibres vinyliques, cellulosiques, ou oléfiniques tissées ou non tissées. Leur qualité résulte alors d'un ajustement entre la porosité, la résistance mécanique, la mouillabilité aux liquides et l'épaisseur.

La porosité du séparateur est ajustée pour éviter que des particules de l'une ou l'autre électrode ne le traverse et réagisse avec l'autre électrode en provoquant une autodécharge avec dégagement éventuel de gaz dans l'élément. Pour aboutir au résultat, une méthode est d'augmenter l'épaisseur ou de multiplier le nombre de couches dudit séparateur, mais avec l'inconvénient de diminuer le volume disponible pour les matériaux anodiques et cathodiques.

En outre des problèmes spécifiques se posent pour chaque type de générateur.

Ainsi, dans les accumulateurs rechargeables comprenant une électrode négative à base de zinc et un électrolyte alcalin à base de électrode négative à base de zinc et un électrolyte alcalin à base de soude ou de potasse concentrée, il est bien connu que le cyclage électrochimique par charges et décharges successives de l'électrode de zinc introduit des inconvénients majeurs. C'est ainsi que l'on connaît le problème de changement de forme de l'électrode de zinc qui correspond à une redéposition préférentielle du zinc sur la face centrale ou inférieure du collecteur de courant. Ce phénomène conduit à un accroissement de l'épaisseur de l'électrode en certains points et à des densités de courant de plus en plus élevées diminuant ainsi le rendement faradique du zinc. De plus les contraintes mécaniques dues à l'accroissement d'épaisseur et au changement de forme de l'électrode sont généralement dramatiques pour la durée de vie de l'accumulateur.

Un second problème posé par ces accumulateurs lors des phases de charge est l'apparition et la croissance des dendrites de zinc à la surface de l'électrode. Lors des cyclages successifs, la croissance de ces dendrites peut aller jusqu'à la traversée de l'espace entre électrode négative de zinc et électrode positive en créant un court-circuit interne. Pour éviter ce problème il est connu de mettre en oeuvre des séparateurs caractérisés par leur propriété de résistance mécanique à la poussée dendritique ou par leur faible perméabilité à la diffusion des ions zincates de façon à limiter les gradients de concentration qui, dans l'électrolyte, favorisent l'apparition et la croissance des dendrites.

Pour les générateurs primaires de type métal-air, ayant tout ou partie de l'électrode positive constituée par une masse compactée poreuse à base d'un oxyde de métal tel que le bioxyde de manganèse (MnO2), régénérable par l'oxygène circulant dans la porosité de l'électrode, un autre problème majeur totalement différent de celui des accumulateurs rechargeables à électrode de zinc se pose.

L'électrode positive étant consituée d'une masse poreuse à l'air, il existe une certaine circulation de l'oxygène au sein de l'électrode jusqu'aux abords immédiats du séparateur. Plus précisément, l'oxygène de l'air pénètre dans l'élément par la porosité de l'électrode positive puis est réduit en eau sur les sites actifs (catalyseurs) de l'électrode à air si elle existe ou sur le bioxyde de manganèse de la masse active positive. Une partie de l'oxygène peut cependant ne pas réagir et diffuser à travers le séparateur vers l'électrode négative. Le matériau constituant l'électrode négative s'oxydera alors chimiquement. Ce mécanisme d'autodécharge diminue la capacité de l'élément galvanique. Cette autodécharge est particulièrement sensible dans les régimes d'utilisation intermittents où la durée de service du générateur peut atteindre plusieurs mois.

De même en stockage, si le générateur n'est pas protégé par un emballage étanche aux gaz, l'oxydation du métal constitutif de l'électrode négative conduira à des pertes de capacité importantes.

A titre d'exemple, un gel anodique à base de zinc tel qu'il est actuellement utilisé dans les piles alcalines, peut perdre de 20 à 80% de sa capacité en 1 an.

Plusieurs brevets décrivent des séparateurs utilisant l'alcool polyvinylique et ayant la propriété de limiter la diffusion des ions dans l'électrolyte (en particulier les zincates) afin d'éviter la croissance des dendrites de zinc ou le percement du séparateur dans les accumulateurs rechargeables argent-zinc, nickel-zinc ou air-zinc.

Ces séparateurs donnent cependant des mauvais résultats dans les générateurs primaires de type métal-air. En effet ils sont caractérisés par une réticulation importante de l'alcool polyvinylique afin d'assurer une bonne résistance mécanique au percement par les dendrites, et créer un réseau de chaînes macro-moléculaires faisant barrière au passage des ions zincate en solution dans l'électrolyte.

Cette forte réticulation diminue les propriétés hydrophiles du séparateur et par conséquent sa faculté d'absorber l'électrolyte alcalin fortement concentré.

Un autre inconvénient de tels séparateurs est leur résistance électrolytique relativement élevée qui limite la puissance du générateur dans les applications à fort courant du grand public (transistors, flash, magnétophones, etc).

Le brevet US-A-4 361 632 décrit un séparateur composite réticulé à chaud permettant de limiter la diffusion des ions, et en particulier des zincates, dans les accumulateurs à électrode de zinc rechargeable.

Le brevet FR-A-2 251 922 décrit un séparateur à plusieurs couches comportant une couche poreuse et une membrane semi-perméable constituée d'un dérivé de l'alcool polyvinylique. Le procédé décrit s'attache à éviter que soit noyée en profondeur la couche poreuse, et à limiter l'imprégnation dans une zone superficielle de la couche poreuse. Le film de PVA fortement réticulé obtenu est sans doute efficace pour limiter la diffusion des zincates dans les accumulateurs à électrode de zinc rechargeable, mais ne permet pas de limiter la diffusion de très petites molécules telles que les molécules d'oxygène sous forme gazeuse ou dissoutes dans l'électrolyte.

Le brevet FR-A-2 110 486 décrit un accumulateur alcalin comportant une feuille d'alcool polyvinylique fortement réticulé entourant l'électrode de zinc et retenant les zincates.

Les brevets US-A-3 892 591 et JP-A-7 567 428 décrivent l'utilisation de l'alcool polyvinylique dans les piles salines C/Zn, comme pâte de séparateur avec un électrolyte salin et un support en papier pour assurer une bonne réactivité de l'électrode de zinc massive en forme de container.

La présente invention a pour but de résoudre les problèmes spécifiques aux générateurs alcalins primaires de type métal/air, et de trouver un séparateur qui donne toute satisfaction dans ces générateurs.

La présente invention a pour objet un séparateur pour générateur électrochimique à électrolyte alcalin de type métal/air, comportant notamment une électrode négative à base de zinc, ledit séparateur, comprenant un support à base de fibres tissées ou non tissées, caractérisé par le fait que le support est muni d'au moins un film à base d'alcool polyvinylique très peu perméable à la diffusion de l'oxygène dissout, ledit alcool polyvinylique étant modérément réticulé, ledit séparateur absorbant entre 150 et 300 g.m$^{-2}$ de solution d'hydroxyde de potassium 8.5 N, ledit électrolyte étant emprisonné dans le réseau d'alcool polyvinylique sans possibilité d'échange hydrodynamique avec le générateur, ledit séparateur ayant une résistance électrolytique comprise entre 0 et 2 milliohms.cm$^{-2}$, et une épaisseur inférieure à 0.2 mm.

L'épaisseur dudit film est comprise par exemple entre 25 et 60 microns.

L'épaisseur dudit séparateur est par exemple comprise entre 100 et 200 microns, et de préférence de l'ordre de 150 microns.

Selon une première variante, ledit support est un non tissé à base de fibres organiques ou inorganiques en polyamide, polyéthylène, cellulose, polyester, polypropylène, ou verre.

Selon une seconde variante, ledit support est un tissé à base de fibres organiques ou inorganiques en polyamide, polyéthylène, cellulose, polyester, polypropylène, ou verre.

Le séparateur selon l'invention présente donc une très faible vitesse de diffusion de l'oxygène à travers son épaisseur et une aptitude à absorber fortement une solution alcaline fortement concentrée.

Dans le générateur, une certaine quantité d'électrolyte alcalin est absorbée dans la structure du séparateur, ledit électrolyte absorbé étant alors fortement immobilisé sans possibilité d'échange hydrodynamique avec les autres parties du générateur.

Le séparateur a une faible résistance électrolytique particulièrement adaptée aux utilisations à fort courant des générateurs primaires grand public.

Une autre propriété remarquable est l'excellente tenue mécanique pour résister aux contraintes dues aux changements de volume des électrodes.

La présente invention a également pour objet un procédé de fabrication d'un séparateur selon l'invention.

Selon une première méthode, le film d'alcool polyvinylique est réalisé à partir d'une enduction obtenue par empâtage d'au moins une partie du support par une solution aqueuse d'alcool polyvinylique modérément réticulé, suivie d'une élimination du solvant.

Selon une seconde méthode, on utilise un film commercial d'alcool polyvinylique fortement hydrolysé qui est thermosoudé sur une partie ou la totalité de la surface.

L'empâtage ou le thermosoudage du film d'alcool polyvinylique est réalisé sur une ou deux faces, avec éventuellement plusieurs couches successives.

D'autres caractéristiques et avantages de la présente invention apparaîtront au cours de la description suivante de modes de réalisation donnés à titre illustratif mais nullement limitatif. Dans le dessin annexé, la figure unique montre les courbes illustrant la perméabilité à l'oxygène d'un séparateur de l'art antérieur et de séparateurs selon l'invention.

Selon une première méthode, dite d'empâtage, on prépare un mélange de composition suivante : (en poids)

-eau désionisée 80 à 90%

-alcool polyvinylique 10 à 20%

- agent de conservation 0 à 5%      (1)

On maintient une forte agitation pendant la dissolution. La solution est ensuite chauffée à une température comprise entre 80 et 100°C avec agitation. On peut éventuellement introduire un agent réticulant d'origine organique ou inorganique.

La viscosité à 25°C d'une telle solution après stockage de 24 heures varie de 50 à 100 centipoises.

Le support tissé ou non tissé est alors enduit ou empâté par la solution visqueuse obtenue. L'enduction du support peut se faire par défilement dans un rail de guidage. Une raclette disposée au-dessus du support est alimentée en solution. Le débit d'alimentation de la raclette est fonction de l'angle et de la vitesse de défilement. Selon les résultats désirés, l'empâtage peut être fait sur une ou deux faces, avec éventuellement plusieurs couches successives.

La composition, la viscosité et la vitesse d'empâtage sont ajustées pour obtenir une imprégnation en profondeur du support tissé ou non tissé, autrement dit une absorption d'électrolyte (solution de KOH 8.5 N) entre 150 et 300 g/m$^2$, pour obtenir une résistance électrolytique entre 0 et 2 milliohms/cm$^2$ pour obtenir une perméabilité à l'oxygène inférieure à 17 cm$^3$.m$^{-2}$.h$^{-1}$ selon le montage expérimental décrit ci-après et pour obtenir une épaisseur inférieure à 0.2 mm.

Il est important d'obtenir un séparateur dont les caractéristiques citées ci-dessus se retrouvent uniformément identiques en tout point de la surface du séparateur.

Il faut en particulier éviter que les pores les plus gros soient mal recouverts ou recouverts par une épaisseur insuffisante d'alcool polyvinylique. Le séparateur obtenu est ensuite séché à une température choisie pour éviter une trop forte réticulation. Le séchage peut s'effectuer de préférence à température ambiante.

A titre d'exemple, un support non tissé habituellement utilisé pour les piles alcalines a été empâté avec le mélange précédent.

Les caractéristiques du support sont les suivantes :

- grammage 39 g/m$^2$

- épaisseur 100 microns

- résistance électrolytique 1 milliohm/cm$^2$

Pour une vitesse d'empâtage de 10 m/mn sur une face, on a obtenu un séparateur avec les caractéristiques suivantes :

- grammage 70 g/m$^2$

- épaisseur 150 microns

- résistance électrolytique 1,5 milliohm/cm$^2$

- absorption électrolytique 180 g.m$^{-2}$

- perméabilité à l'oxygène 15 cm$^3$.cm$^{-2}$.h$^{-1}$

Pour un empâtage sur les deux faces du support, les caractéristiques ont été :

- grammage 90 g/m$^2$

- épaisseur 200 microns       .

- résistance électrolytique 3,5 milliohm/cm$^2$

- absorption électrolytique 140 g/m$^{-2}$

- perméabilité à l'oxygène 20 cm$^3$.cm$^{-2}$.h$^{-1}$

Le séparateur enduit sur une face a une résistance deux fois plus faible que le séparateur enduit sur deux faces. Une résistance trop élevée du séparateur est un inconvénient pour les générateurs, car elle entraîne une diminution du niveau de tension moyen et par conséquent une perte de puissance.

On voit dans cet exemple que la technique de fabrication dudit séparateur empâté permet d'obtenir un bon recouvrement du support tout en limitant la résistance électrolytique du séparateur dans des limites acceptables.

On constate de même que la perméabilité à l'oxygène décroît lorsque l'absorption électrolytique croît.

Ainsi, les séparateurs à base d'alcool polyvinylique habituellement utilisés dans les accumulateurs à électrode de zinc caractérisés par une réticulation élevée sont beaucoup moins efficaces que le séparateur selon l'invention du fait de leur absorption électrolytique faible. L'effet de barrière due au réseau de chaînes macromoléculaires liées entre elles n'est pas efficace dans le cas de la molécule d'oxygène dissoute dans l'électrolyte.

Au contraire, l'efficacité du séparateur selon l'invention peut s'expliquer par l'effet d'emprisonnement de l'électrolyte alcalin dans le réseau d'alcool polyvinylique.

On peut supposer que la très faible solubilité et vitesse de diffusion de l'oxygène dans l'hydroxyde de potassium concentré ainsi que l'absence d'échange hydrodynamiques entre l'électrolyte absorbé sur le séparateur et l'électrolyte libre dans le générateur conduisent à un effet de barrière très important pour le passage de l'oxygène en solution à travers le séparateur.

Dans une seconde méthode dite de colaminage à chaud, on réalise un séparateur multicouche par thermosoudage d'un support tissé ou non-tissé avec un film écran insoluble en alcool polyvinylique.

Le film d'alcool polyvinylique doit être insoluble en milieu alcalin et peut être par exemple un film d'alcool polyvinylique commercialisé par la société NEDI.

Son grammage est de 31 g/m², son épaisseur est comprise entre 25 et 60 microns et sa résistance électrolytique est de 0,5 milliohm/cm². Le thermosoudage peut être réalisé en continu, par passage du support et du film d'alcool polyvinylique entre deux rouleaux chauffants. La qualité de l'adhésion dépend de la pression exercée, du temps de contact, et de la température des rouleaux. A titre d'exemple, on peut utiliser une pression de 1,5 à 5 Kg/cm² et une température de 60 à 80°C, de préférence 80°C.

Les caractéristiques du séparateur ainsi obtenu sont :

| | |
|---|---|
| - film d'alcool polyvinylique (NEDI) | : 30 microns d'épaisseur |
| - support non:tissé | : 100 microns " |
| - séparateur $S_2$ couches thermosoudées | : 130 microns " |
| - résistance électrolytique | : 1,5 milliohm/cm² |
| - absorption électrolytique | : 150 g.m$^{-2}$ |
| - perméabilité à l'oxygène | : 13 cm³.cm$^{-2}$.h$^{-1}$ |

Avec cette méthode de fabrication, il est possible d'obtenir une épaisseur et une résistance électrolytique faibles tout en gardant une très faible perméabilité à l'oxygène. Un autre avantage de cette variante est d'obtenir un séparateur dont le côté non tissé garde ses propriétés d'absorption électrolytique améliorant ainsi la conductivité ionique entre les surfaces anodique et cathodique. Ce procédé est donc particulièrement intéressant pour une application en générateur.

Les autres méthodes connues de contre-collage d'un film sur un support conduisent, du fait du type de colle utilisée, à des résistances électrolytiques supérieures de 50 à 100% aux valeurs précédentes.

On décrit ci-dessous les divers tests effectués sur les séparateurs précédemment obtenus.

On étudie les séparateurs suivants :

- Un séparateur témoin T habituellement utilisé dans les générateurs électrochimiques primaires, constitué par un feutre de fibres non tissées

- Un séparateur $S_1$ selon l'invention constitué par un séparateur témoin, enduit sur les deux faces par la solution d'alcool polyvinylique de composition (1) précitée.

- Un séparateur $S_2$ selon l'invention constitué par un séparateur témoin colaminé à un film d'alcool polyvinylique par thermosoudage.

Les séparateurs selon l'invention sont testés dans des piles alcalines de type zinc/bioxyde de manganèse pour évaluer l'influence de ces séparateurs du point de vue des niveaux de tension et de capacité.

Le générateur témoin est une pile alcaline de module LR6 suivant la norme CEI, à séparateur fibreux non tissé. Le générateur $P_1$ est une pile analogue mais dont le séparateur $S_3$ a été enduit sur une face d'une solution d'alcool polyvinylique selon l'invention.

Le générateur $P_2$ est une pile analogue mais dont le séparateur a été colaminé avec un film d'alcool polyvinylique selon l'invention (séparateur $S_2$).

Le tableau I donne les résultats pour deux régimes de décharge (force électromotrice en volts U/5Ω: test de tension instantanée mesurée avec la pile connectée sur une résistance de 5 ohms ; durée de décharge jusqu'à la tension d'arrêt en heures).

TABLEAU I

| REGIME MAGNETO. RESISTANCE DE DECHARGE 10 OHMS-1 HEURE PAR JOUR-ARRET à 0,9 volt | | | | |
|---|---|---|---|---|
| | FEM (Volt) | U/5Ω (Volt) | Durée à U arrêt (Heure) | Rdt % |
| TEMOIN | 1,57 | 1,52 | 15,66 | 68 % |
| $P_1$ | 1,58 | 1,53 | 15,75 | 69 % |
| $P_2$ | 1,57 | 1,53 | 15,87 | 71 % |
| REGIME RADIO. RESISTANCE DE DECHARGE 75 OHMS-4 HEURES PAR JOUR-ARRET à 0,9 volt | | | | |
| | FEM (Volt) | U/5Ω (Volt) | Durée à U arrêt (Heure) | Rdt % |
| TEMOIN | 1,58 | 1,53 | 134,42 | 87,1 |
| $P_1$ | 1,58 | 1,52 | 137,23 | 88,5 |
| $P_2$ | 1,57 | 1,52 | 140,00 | 87,2 |

On constate que les séparateurs étudiés n'affectent pas les performances, en particulier les valeurs mesurées dans le tableau I sont identiques.

La perméabilité à l'oxygène desdits séparateurs a été mesurée grâce au montage expérimental décrit ci-dessous. Le séparateur à tester est placé entre les deux compartiments A et B d'une cellule étanche. Dans le compartiment A est ménagé une arrivée et une sortie d'oxygène. Afin de se rapprocher le plus possible des conditions d'utilisation des générateurs de type métal-air, la pression de gaz dans le compartiment A est réglé à 1 bar. Le débit d'oxygène est ajusté à 4 litres/heure. Le compartiment B possède une sortie vers une chambre de récupération des gaz préalablement remplie d'azote. A intervalles réguliers, un échantillon de gaz est prélevé dans la chambre de récupération et la teneur en oxygène est analysée. Cette teneur est une mesure de la vitesse de diffusion de l'oxygène à travers le séparateur séparant les compartiments A et B.

Plusieurs types de séparateurs ont été testés :

- Un séparateur témoin T précité habituellement utilisé dans les piles alcalines.

- Un séparateur $S_3$ précité : séparateur témoin qui a été enduit sur une face d'une solution d'alcool polyvinylique.

- Un séparateur $S_1$ précité : séparateur témoin qui a été enduit sur deux faces d'une solution d'alcool polyvinylique.

- Un séparateur $S_2$ précité : séparateur témoin et film d'alcool polyvinylique commercialisé par la Société NEDI qui ont été colaminés et thermosoudés.

Tous les séparateurs ont été testés après imprégnation par de la potasse 8,5N qui constitue l'électrolyte des générateurs alcalins.

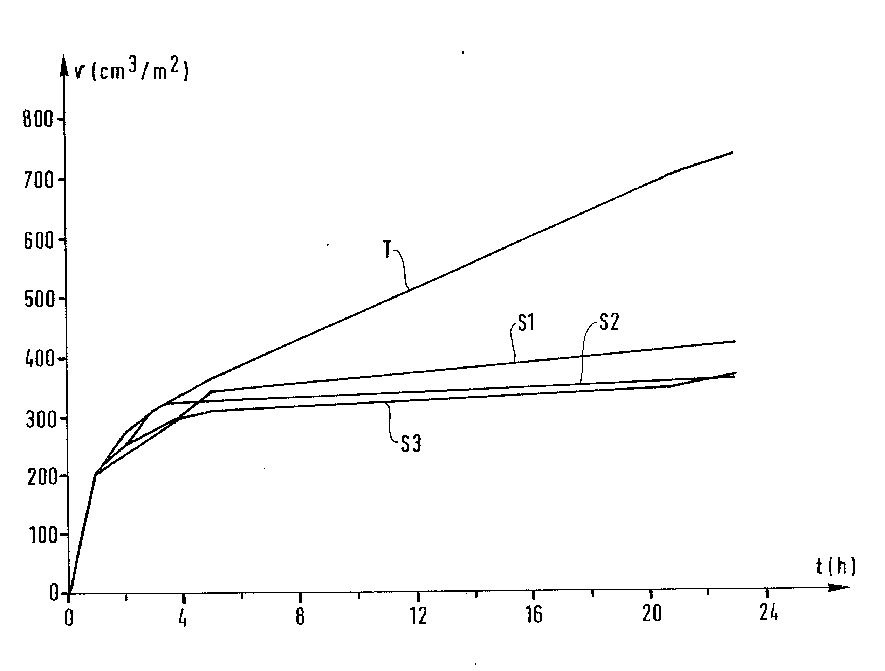

Les résultats sont représentés sur la figure 1 par les courbes correspondantes référencées T, $S_1$, $S_2$, $S_3$ illustrant la quantité d'oxygène diffusé v ($cm^3/m^2$) en fonction du temps t (en heure). On remarque une différence de perméabilité très importante entre le témoin et les séparateurs selon l'invention. Ainsi, après 24 heures la quantité d'oxygène ayant diffusé à travers le témoin est environ le double de ce qui est observé dans le cas des séparateurs $S_1$, $S_2$ et $S_3$. De plus l'évolution de la diffusion de l'oxygène se stabilise rapidement pour les séparateurs selon l'invention, alors que l'on observe une augmentation continue dans le cas du témoin.

On constate donc que l'utilisation en générateur électrochimique, particulièrement de type métal-air, de séparateurs fabriqués selon la présente invention permet de limiter considérablement la corrosion du zinc constituant de l'électrode négative. Cet avantage est obtenu sans détériorer les performances électriques du générateur car le procédé de fabrication décrit ci-dessus permet d'obtenir des séparateurs de faible

6

épaisseur, de faible résistance électrolytique, de bonne mouillabilité à l'électrolyte, et de bonne tenue mécanique.

Une configuration particulièrement avantageuse est d'envelopper l'électrode négative de zinc dans un séparateur mis en forme de sac qui aura pour fonction d'empêcher la diffusion de l'oxygène. Il est évident que toutes les formes d'enveloppement de l'électrode négative sont possibles et restent du domaine de l'art.

De plus, et en particulier pour limiter le surcoût de ce type de séparateur, il est possible de ne recouvrir par empâtage ou thermosoudage qu'une partie du support fibreux. La surface à recouvrir devra être choisie de façon à protéger efficacement le volume de l'électrode négative.

## Revendications

1/ Séparateur pour générateur électrochimique à électrolyte alcalin de type métal/air comportant notamment une électrode négative à base de zinc, ledit séparateur, comprenant un support à base de fibres tissées ou non tissées, caractérisé par le fait que le support est muni d'au moins un film à base d'alcool polyvinylique très peu perméable à la diffusion de l'oxygène dissout, ledit alcool polyvinylique étant modérément réticulé, ledit séparateur absorbant entre 150 et 300 $g.m^{-2}$ de solution d'hydroxyde de potassium 8.5 N, ledit électrolyte étant emprisonné dans le réseau d'alcool polyvinylique sans possibilité d'échange hydrodynamique avec le générateur, ledit séparateur ayant une résistance électrolytique comprise entre 0 et 2 $milliohms.cm^{-2}$, et une épaisseur inférieure à 0.2 mm.

2/ Séparateur selon la revendication 1, caractérisé par le fait que l'épaisseur dudit film est comprise entre 25 et 60 microns.

3/ Séparateur selon l'une des revendications 1 et 2, caractérisé par le fait qu'il présente une épaisseur comprise entre 100 et 200 microns.

4/ Séparateur selon la revendication 3, caractérisé par le fait que ladite épaisseur est de l'ordre de 150 microns.

5/ Séparateur selon l'une des revendications précédentes, caractérisé par le fait que ledit support est un non tissé à base de fibres organiques ou inorganiques en polyamide, polyéthylène, cellulose, polyester, polypropylène, ou en verre.

6/ Séparateur selon l'une des revendications 1 à 4, caractérisé par le fait que ledit support est un tissé à base de fibres organiques ou inorganiques en polyamide, polyéthylène, cellulose, polyester, polypropylène, ou en verre.

7/ Séparateur selon l'une des revendications précédentes, caractérisé par le fait qu'il est mis en forme d'enveloppe adaptée à la forme de l'électrode concernée.

8/ Procédé de fabrication d'un séparateur selon la revendication 1, caractérisé par le fait que le film d'alcool polyvinylique est réalisé à partir d'une enduction obtenue par empâtage d'au moins une partie du support par une solution aqueuse d'alcool polyvinylique suivie d'une élimination du solvant.

9/ Procédé de fabrication d'un séparateur selon la revendication 1, caractérisé par le fait que le film d'alcool polyvinylique est thermosoudé sur une partie seulement de la surface du support.

EP 0 352 603 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | FR-A-2 283 554 (SAFT)<br>* Page 1, lignes 7-12; page 2, lignes 26-36; page 3, lignes 33-35; page 4, lignes 25-39; page 6, ligne 17 *<br>--- | 1,5,6,8,9 | H 01 M 2/16<br>H 01 M 2/14<br>H 01 M 12/06 |
| Y | PATENT ABSTRACTS OF JAPAN, vol. 6, no. 259 (E-149)[1137], 17 décembre 1982; & JP-A-57 158 950 (TOKYO SHIBAURA DENKI K.K.) 30-09-1982<br>* Résumé *<br>--- | 1,5,6,8,9 | |
| A,D | US-A-4 361 632 (WEBER et al.)<br>* Figures 1,4; colonne 1, lignes 36-47; colonne 2, lignes 29-40; colonne 3, lignes 7-43; colonne 4, lignes 16-57; colonne 9, lignes 18-20; colonne 10, lignes 6-7 *<br>--- | 1-9 | |
| A | N.T.I.S. TECH NOTES: MATERIALS, no. 2H, février 1985, page 205, Sprinfield, VA, US; N.T. MUSIAL: "In situ cross-linking of polyvinyl alcohol films"<br>* Colonne du milieu, lignes 35-39 *<br>--- | 1 | |
| A | PATENT ABSTRACTS OF JAPAN, vol. 11, no. 275 (E-537)[2722], 5 septembre 1987; & JP-A-62 76 251 (TOSHIBA CORP.) 08-04-1987<br>--- | 1 | DOMAINES TECHNIQUES RECHERCHES (Int. Cl.5)<br><br>H 01 M |
| A,D | CHEMICAL ABSTRACTS, vol. 83, no. 22, 1 décembre 1975, page 169, résumé no. 182075x, Columbus, Ohio, US; & JP-A-75 67 428 (MATSUSHITA ELECTRIC INDUSTRIAL CO., LTD) 06-06-1975<br>--- | 9 | |
| A | FR-A-2 283 555 (SAFT)<br>---       -/- | 1 | |

Le présent rapport a été établi pour toutes les revendications

| Lieu de la recherche | Date d'achèvement de la recherche | Examinateur |
|---|---|---|
| LA HAYE | 17-10-1989 | CZECH B.P. |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 398 843  (JOSEPH LUCAS LTD) <br> --- | 1 | |
| A | FR-A-2 553 935  (SOCIETE LES PILES WONDER) <br> --- | 1 | |
| A | DE-A-2 212 581  (ESB INC.) <br> ----- | | |

DOMAINES TECHNIQUES RECHERCHES (Int. Cl.5)

Le présent rapport a été établi pour toutes les revendications

| Lieu de la recherche | Date d'achèvement de la recherche | Examinateur |
|---|---|---|
| LA HAYE | 17-10-1989 | CZECH B.P. |